# EUROPÄISCHE PATENTSCHRIFT

(11) **EP 0 389 835 B1**
(45) Veröffentlichungstag und Bekanntmachung des Hinweises auf die Patenterteilung: **05.06.1996**
(21) Anmeldenummer: 90104310.9
(22) Anmeldetag: 07.03.1990
(51) Int. Cl.: H04N 1/41

(54) **Verfahren und Schaltungsanordnung zur Wiedergabe von empfangenen Videosignalen**
Method and circuit arrangement for the reproduction of received video signals
Procédé et arrangement de circuit pour la reproduction des signaux vidéo reçus

(30) Priorität: 25.03.1989 DE 3909921
(43) Veröffentlichungstag der Anmeldung: 03.10.1990
(73) Patentinhaber: ROBERT BOSCH GMBH, 70442 Stuttgart (DE)
(72) Erfinder: Dohmann, Bernhard, D-3204 Nordstemmen 4 (DE)
(74) Vertreter: Friedmann, Jürgen, Dr.-Ing.

(56) Entgegenhaltungen:
- EP-A- 0 160 547
- IEEE TRANSACTIONS ON COMMUNICATIONS Bd. 38, Nr. 2, Februar 1990, NEW YORK, NY, USA Seiten 215 - 222; CIRO CAFFORIO ET AL: 'Motion Compensated Image Interpolation'
- Signal Processing, vol. 11, no. 4, 1986, December, Amsterdam, NL M. Bierling and R. Thoma, Seiten 387-404

## Beschreibung

Die Erfindung geht aus von einem Verfahren gemäß dem Oberbegriff des Patentanspruchs 1. Ein solches Verfahren ist bekannt aus "Signal Processing, Vol. 11, 1986, Dezember, No. 4, Amsterdam; Seiten 387 bis 404; M. Bierling and R. Thoma: Motion compensating field interpolation using a hierarchically structured displacement estimator".

Zur Übertragung von bewegten Bildern werden sehr große Kanalkapazitäten benötigt. So beträgt beispielsweise die Datenrate eines digitalen Videosignals nach der CCIR-Empfehlung 601 216 Mbit/s. Zur Übertragung von bewegten Bildern mit Hilfe von Übertragungskanälen mit wesentlich geringerer Datenrate, wie beispielsweise dem ISDN-64 Netz, ist daher die gleichzeitige Anwendung verschiedener Verfahren zur Datenreduktion erforderlich. Eines dieser Verfahren ist die Verringerung der zeitlichen Auflösung dadurch, daß Einzelbilder in größeren zeitlichen Abständen als üblich übertragen werden. Dabei kann die Aufnahme selbst durchaus mit einer üblichen Bildfrequenz erfolgen, um beispielsweise einer Verringerung der örtlichen Auflösung bei bewegten Bildinhalten entgegenzuwirken, von den aufgenommenen Bildern wird jedoch nur jeweils das n-te Bild, beispielsweise jedes sechste Bild übertragen.

Bei der Wiedergabe derart übertragener Signale ist es zur Vermeidung von Flimmern durch zu geringe Bildwiederholfrequenz bekannt, jedes übertragene Bild n-mal zu wiederholen. Dadurch werden jedoch Bewegungen ruckartig wiedergegeben, was besonders unangenehm ist. Es sind deshalb bereits Vorschläge bekannt geworden, die darzustellenden Bilder durch Interpolation aus den empfangenen Bildern abzuleiten.

Bei dem Verfahren gemäß Signal Processing, Vol. 11, 1986, Dec., No. 4, Amsterdam, NL, Seiten 387-404, von M. Bierling und R. Thoma, erfolgt eine örtliche und zeitliche Interpolation von Zwischenbildern unter Berücksichtigung der Bewegung. Unbewegter Hintergrund wird dort aus einem der zwei empfangenen Bilder extrapoliert. Aus der EP-A-0 160 547 ist ein bewegungsadaptives Interpolationsverfahren für Bildsignale bekannt. Über einen Bewegungsdetektor wird ein Bildspeicher gesteuert. Ein Speicher für die Bewegungsvektoren wird über einen Selektor gesteuert, der die am häufigsten auftretenden Bewegungsvektoren auswählt.

Aufgabe der vorliegenden Erfindung ist es, ein Verfahren sowie eine Schaltungsanordnung anzugeben, mit welcher in günstiger Weise eine Interpolation zwischen den empfangenen Bildern durchgeführt werden kann und die Wiedergabe von Kanten, welche ruhende und bewegte Bildbereiche voneinander trennen, verbessert ist.

Das erfindungsgemäße Verfahren mit den Merkmalen des Hauptanspruchs 11 hat den Vorteil, daß bei der Interpolation in vorteilhafter Weise sowohl die örtlichen Änderungen (Bewegungen) als auch die Änderungen der Helligkeit zwischen zwei aufeinanderfolgend übertragenen Bildern berücksichtigt werden.

Diejenigen Bildelemente der darzustellenden Bilder, welche nicht durch Verschieben jeweils eines Bildelementes des empfangenen Bildes mit Information versehen sind, für die jedoch ein Bewegungsvektor des entsprechenden Bildelements des empfangenen Bildes vorliegt, werden mit Information aus dem jeweils folgenden empfangenen Bild versehen.

Da die Wiedergabe von Kanten, welche ruhende und bewegte Bildbereiche voneinander trennen, erheblich verbessert ist, ist die Wiedergabe von Hintergrundinformation, welche durch die Bewegung eines Objekts an dessen rückwärtiger Kante frei wird, ermöglicht.

Durch die in den abhängigen Ansprüchen aufgeführten Maßnahmen sind vorteilhafte Weiterbildungen und Verbesserungen der im Hauptanspruch angegebenen Erfindung möglich. Insbesondere werden vorteilhafte Schaltungsanordnungen angegeben, die eine Durchführung des erfindungsgemäßen Verfahrens mit marktgängigen digitalen Bausteinen ermöglichen. Dabei wird in vorteilhafter Weise die Ansteuerung der verschiedenen Speicher bei der Darstellung des freiwerdenden Hintergrundes ermöglicht.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer Schaltungsanordnung zur Wiedergabe von übertragenen Videosignalen, wobei eine Bewegungsinterpolation vorgesehen ist,
- Fig. 2: eine schematische Darstellung eines Bildes in mehreren Bewegungsphasen,
- Fig. 3: als Blockschaltbild eine Schaltungsanordnung zur Bewegungsinterpolation,
- Fig. 4: ein Zeitdiagramm zur Darstellung von bewegten Objekten,
- Fig. 5: die gleichen bewegten Objekte als schematische Darstellung mehrerer überlagerter Schirmbilder,
- Fig. 6: eine schematische Darstellung eines Speichers für die Information, ob einzelne Bildelemente durch Bewegungsinterpolation entstanden sind,
- Fig. 7: eine Logikschaltung zur Steuerung des Schreibvorgangs in einem Videospeicher,
- Fig. 8: ein Flußdiagramm und
- Fig. 9: ein Zeitdiagramm verschiedener Steuersignale für einen Videospeicher.

Gleiche Teile sind in den Figuren mit gleichen Bezugszeichen versehen.

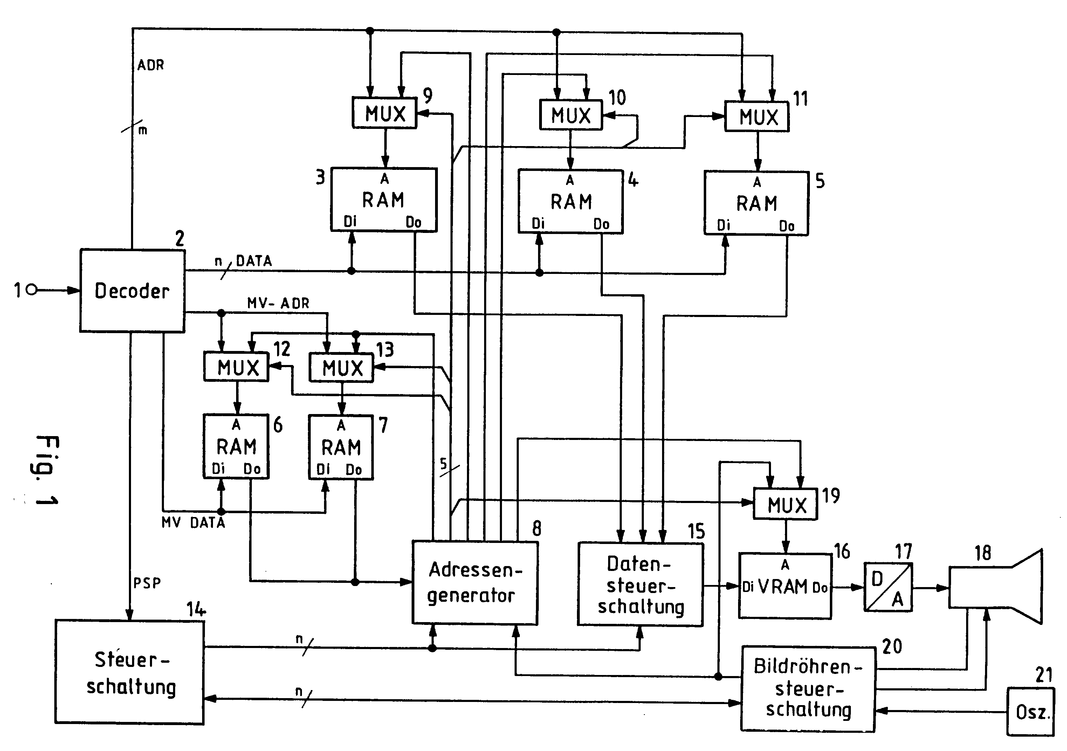

Der Schaltungsanordnung nach Fig. 1 wird bei 1 das übertragene digitale Signal mit einer Datenrate von 64 kbit/s zugeführt. Wie eingangs erwähnt, sind dabei verschiedene Datenreduktionsverfahren angewendet worden. Eines dieser Verfahren besteht in einer Reduzierung der Bewegungsauflösung, wobei nur jedes sechste Teilbild übertragen wird. Bei der vorangegangenen Codierung wurden jedoch Bewegungsvektoren ermittelt, welche die Bewegung von Bildbereichen (sogenannten Blöcken) nach Größe und Richtung beschreiben. Diese Bewegungsvektoren werden zusammen mit den übrigen Daten übertragen.

Die bei 1 zugeführten Signale werden in einem Decoder 2 decodiert. Von den im wesentlichen bekannten Funktionen des Decoders 2 sind nur die im folgenden erläuterten im Zusammenhang mit der vorliegenden Erfindung von Bedeutung. Innerhalb von 120 ms werden vom Decoder 2 nacheinander für jedes der Bildelemente die jeweiligen Daten (Helligkeit und gegebenenfalls Farbe) und eine die Position des jeweiligen Bildelements innerhalb des Bildes kennzeichnende Adresse ausgegeben. Diese digitalen Signale werden als n- bzw. m-bit breiter Datenstrom ausgegeben und sind in der Figur mit DATA und ADR-WR bezeichnet. Von dem Decoder 2 werden ferner aus den bei 1 ankommenden Eingangssignalen die Bewegungsvektoren MV separiert - und zwar ebenfalls als Daten MV-DATA und als zugehörige Adressen MV-ADR. Sowohl die Bilddaten DATA als auch die Bewegungsvektoren werden zunächst in Speichern abgelegt. Dazu sind für die Bilddaten drei Bildspeicher 3, 4, 5 und für die Bewegungsvektoren zwei Speicher 6, 7 vorgesehen, welche jeweils sämtliche Bilddaten bzw. Bewegungsvektoren eines Bildes aufnehmen können.

Als Speicher 3 bis 7 werden Schreib-Lese-Speicher (RAM) mit Dateneingängen DI, Datenausgängen DO und Adresseneingängen A verwendet. Als Bausteine erhältliche Speicher dieser Art sind im allgemeinen nicht gleichzeitig beschreibbar und lesbar, deshalb sind bei dem Ausführungsbeispiel drei Bildspeicher 3, 4, 5 und zwei Speicher 6, 7 für Bewegungsvektoren vorgesehen. Ohne diese Beschränkung kann die Erfindung auch mit zwei Bildspeichern und einem Speicher für Bewegungsvektoren ausgeführt werden.

Zum Einschreiben der Bilddaten und Bewegungsvektoren werden die Speicher 3 bis 7 von dem Decoder 2 adressiert, während zum Auslesen die Adressierung mit Hilfe von Adressen ADR-RD erfolgt, die in einem Adressengenerator 8 erzeugt werden. Den Adresseneingängen A der Speicher 3 bis 7 sind zur Umschaltung zwischen den Schreib- und Leseadressen Multiplexer 9, 10, 11, 12, 13 vorgeschaltet, die ebenfalls vom Adressengenerator 8 gesteuert werden.

Vom Decoder 2 wird ferner pro Bild ein Startimpuls PSP (Picture start pulse) an eine übergeordnete Steuerschaltung 14 abgegeben. Die Steuerschaltung 14 steuert wiederum den Adressengenerator 8 und eine Datensteuerschaltung 15, mit deren Hilfe die aus den Bildspeichern 3 bis 5 gelesenen Daten einem weiteren Bildspeicher 16 nach entsprechender Verarbeitung zugeleitet werden. Der Bildspeicher 16 enthält schließlich in digitaler Form die Information, welche über einen Digital/Analog-Wandler 17 der Bildröhre 18 als Videosignal zugeführt wird. Deshalb wird der Speicher 16 im folgenden als Videospeicher (VRAM) bezeichnet.

Dem Videospeicher 16 sind zum Einschreiben und Lesen verschiedene Adressen zuführbar, wozu ein Multiplexer 19 dem Adresseneingang A vorgeschaltet ist, dessen Eingänge einerseits mit dem Adressengenerator 8 und andererseits mit der Bildröhren-Steuerschaltung 20 verbunden sind. Diese steuert ferner weitere Vorgänge an der Bildröhre 18, wie Horizontal- und Vertikalablenkung und Strahlaustastung. Außerdem ist die Bildröhren-Steuerschaltung 20 in der Lage, mit der übergeordneten Steuerschaltung 14 Daten auszutauschen. Zur Taktung der Bildröhren-Steuerschaltung 20 ist ein Oszillator 21 vorgesehen.

Während des Empfangs jeweils eines Bildes werden sechs Bilder aus dem Videospeicher 16 ausgelesen und auf dem Schirm der Bildröhre 18 dargestellt. Von diesen sechs Bildern ist bei bewegten Bildern jedoch nur eines dem zuvor empfangenen Bild gleich, die weiteren fünf Bilder werden durch Interpolation zwischen diesem Bild und dem danach empfangenen Bild gewonnen. Dabei wird davon ausgegangen, daß zwischen einem und dem folgenden empfangenen Bild eine Bewegung entsprechend dem zusammen mit dem einen empfangenen Bild übertragenen Bewegungsvektor stattgefunden hat. Ein derart bewegtes Bildelement wird in den nicht empfangenen darzustellenden Bildern (Zwischenbildern) von Bild zu Bild entsprechend dem jeweiligen Anteil am Bewegungsvektor verschoben in den Videospeicher 16 eingeschrieben. Nach dem Einschreiben des empfangenen Bildes in den Videospeicher 16 werden dementsprechend die Adressen für das folgende darzustellende Zwischenbild um 1/6 der Größe des Bewegungsvektors MV verändert. Beim folgenden Zwischenbild werden die Adressen zum Einschreiben in den Videospeicher 16 um 2/6 geändert usw.. Dieses erfolgt jeweils für eine horizontale und eine vertikale Komponente MVX und MVY des Bewegungsvektors.

Da die derart bewegten Bildelemente außer ihrer Lage im Bild auch ihre Helligkeit ändern können, wird bei der Ableitung der Zwischenbilder nicht nur die beschriebene örtliche Interpolation, sondern auch noch eine Interpolation der Signalwerte vorgenommen. Dazu werden aus einem der Bildspeicher 3 bis 5 jeweils die Daten eines Bildelementes zweier aufeinanderfolgender Bilder ausgelesen, wobei sich die Adressen um den Bewegungsvektor voneinander unterscheiden. In der Daten-Steuerschaltung 15 wird aus beiden Daten, welche den Signalwert des jeweiligen Bildelementes bzw. den Grauwert darstellen, ein Zwischenwert gebildet, der in den Videospeicher 16 eingeschrieben wird.

Damit die beschriebenen Interpolationsvorgänge durchgeführt werden können, während gleichzeitig ein weiteres Bild decodiert und gespeichert wird, sind für die Speicherung der Bilddaten drei Bildspeicher 3 bis 5 vorgesehen, von denen jeweils einer mit neuen Bilddaten beschrieben wird, während aus den zwei anderen Bildspeichern Bilddaten für die Interpolation ausgelesen werden. Zur Zwischenspeicherung der Bewegungsvektoren sind lediglich zwei Speicher 6, 7 erforderlich, von denen jeweils einer im Schreib- und der andere im Lesebetrieb arbeitet.

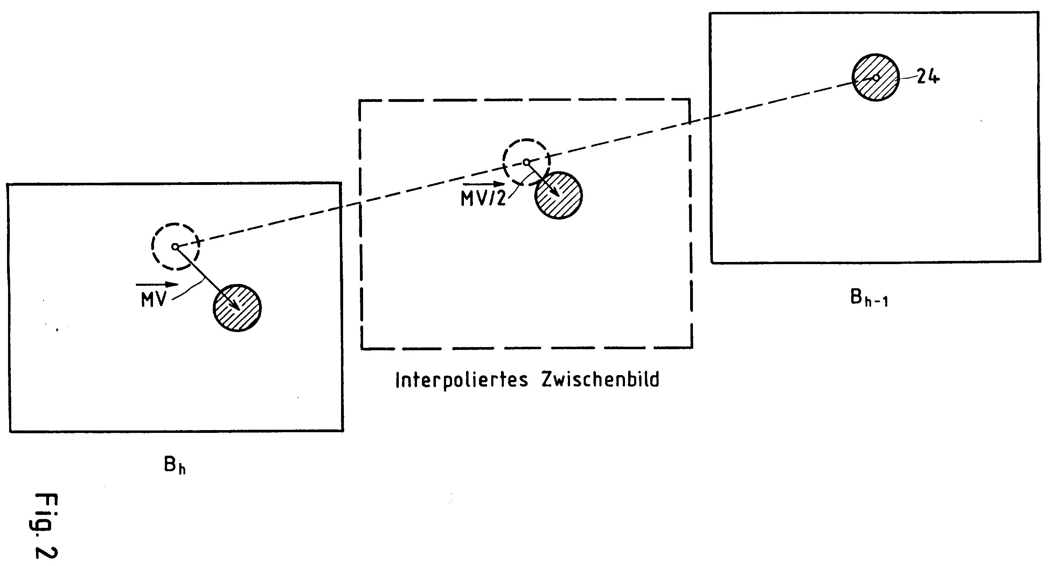

Zur weiteren Erläuterung der bewegungsabhängigen Interpolation sind in Fig. 2 ein empfangenes Bild Bₕ₋₁ mit einem Objekt 24, das danach empfangene Bild Bₕ sowie ein interpoliertes Zwischenbild dargestellt. Der Einfachheit halber wurde die Darstellung auf ein interpoliertes Zwischenbild beschränkt. Von der Aufnahme des Bildes Bₕ₋₁ bis zur Aufnahme des Bildes Bₕ hat sich das Objekt 24 um den Bewegungsvektor MV bewegt. Ferner ist das Objekt 24 dunkler geworden, was mit einer engeren Schraffur angedeutet ist. Zur Erzeugung des Zwischenbildes wird das Objekt 24 mit den gleichen Adressen, mit denen es in den Bildspeicher eingeschrieben wurde, ausgelesen. Es wird jedoch mit Adressen, welche um MV/2 verändert sind, in den Videospeicher 16 (Fig. 1) eingeschrieben. Außerdem erfolgt eine Interpolation der Helligkeitswerte zwischen dem Bild Bₕ₋₁ und dem Bild Bₕ. Ergänzend sei noch erwähnt, daß die dargestellte Interpolation nur zufriedenstellend erfolgt, wenn die Bewegungsvektoren hinreichend genau mit der tatsächlichen Bewegung des Bildes übereinstimmen. Eine geeignete Schaltungsanordnung zur Schätzung von Bewegung in einem aufgenommenen Bild, bei welcher Bewegungsvektoren erzeugt werden, ist in der Patentanmeldung P 38 34 477.7 der Anmelderin beschrieben.

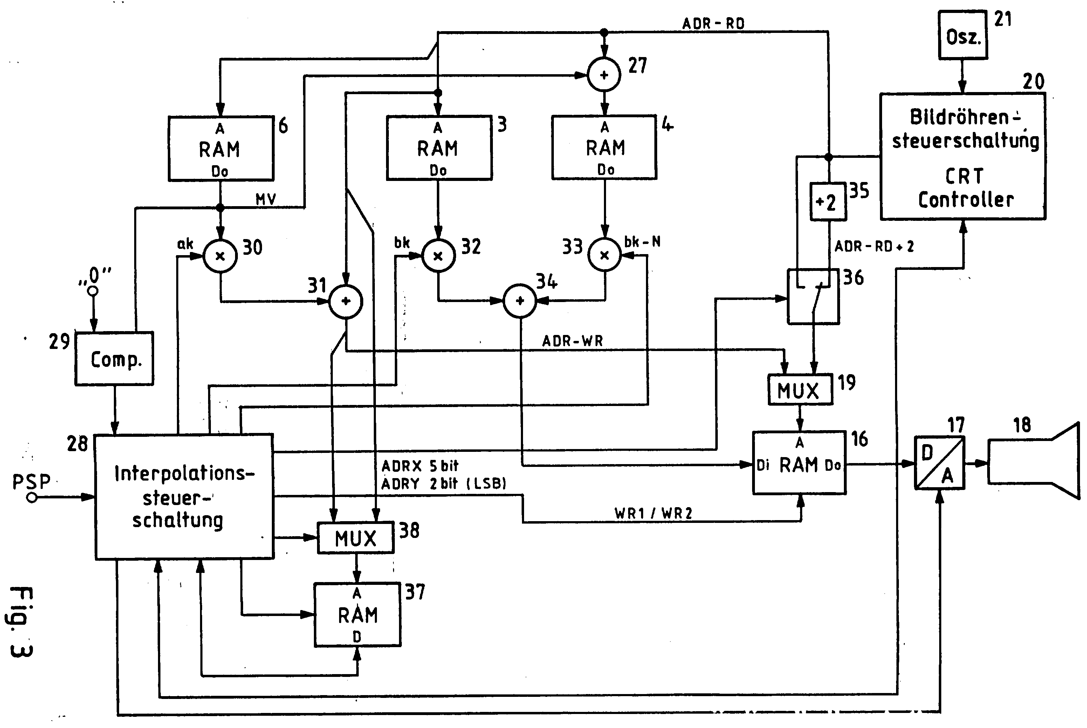

Bei den weiteren Erläuterungen wird auf Fig. 3 Bezug genommen, welche als Blockschaltbild diejenigen Teile der Schaltungsanordnung nach Fig. 1 darstellt, die zum Interpolationsvorgang beitragen. Der Übersichtlichkeit halber wurden diejenigen Teile, welche für das Beschreiben der Speicher 3 bis 7 (Fig. 1) erforderlich sind, fortgelassen - ebenso wie die Multiplexer, die zur Umschaltung zwischen Schreib- und Lesebetrieb dienen. Schließlich zeigt Fig. 3 auch nicht das zyklisch vertauschte Auslesen aus den Speichern und die dazugehörigen Umschalteinrichtungen, sondern stellt lediglich eine Art Momentaufnahme dar, bei welcher aus dem Speicher 6 Bewegungsvektoren und aus den Speichern 3, 4 Bilddaten zweier aufeinanderfolgend empfangener Bilder ausgelesen werden.

Die Grundlage für alle bei der Schaltungsanordnung nach Fig. 3 zum Auslesen verwendeten Adressen stellen die von der Bildröhren-Steuerschaltung 20 erzeugten Adressen ADR-RD dar. Diese umfassen jeweils eine Vertikal- und eine Horizontalkomponente, die entsprechend dem Zeilenraster inkrementiert werden, und werden zum Auslesen aus dem Bildspeicher 3 und aus dem Speicher 6 direkt verwendet - im Falle des Speichers 6 jedoch nur einige der höherwertigen Binärstellen, da für eine Gruppe von Bildelementen (Block) nur ein Bewegungsvektor vorliegt. Dem Bildspeicher 4 werden Adressen zugeführt, welche durch Addition der Adressen ADR-RD mit den aus dem Speicher 6 ausgelesenen Bewegungsvektoren abgeleitet werden. Dazu ist ein Addierer 27 vorgesehen. Die Addition erfolgt jeweils für beide Richtungen getrennt.

Eine Interpolations-Steuerschaltung 28 steuert sowohl die örtliche als auch die amplitudenmäßige Interpolation. Dieser Schaltung werden der Bildstartimpuls PSP sowie ein Signal M zur Kennzeichnung von ruhenden bzw. bewegten Bildbereichen zugeführt. Letzteres wird mit Hilfe eines Komparators 29 gewonnen, welchem einerseits das Signal 0 und andererseits der jeweilige Bewegungsvektor zugeführt wird. Zur örtlichen Interpolation dienen ein Multiplizierer 30 sowie ein Addierer 31, dessen Ausgangssignale als Adressen ADR-WR über den Multiplexer 19 dem Videospeicher 16 zuführbar sind. Die amplitudenmäßige Interpolation erfolgt mit Hilfe von zwei Multiplizierern 32, 33, die an die Datenausgänge der Bildspeicher 3 und 4 angeschlossen sind und deren Ausgangssignale über einen Addierer 34 dem Dateneingang des Videospeichers 16 zuführbar sind.

In die Zuleitung der Adressen von der Bildröhren-Steuerschaltung 20 zum Multiplexer 19 ist ein Addierer 35 sowie ein Umschalter 36 eingeschaltet. Außerdem ist ein weiterer Speicher 37 und weiterer Multiplexer 38 vorgesehen.

Für die folgende Beschreibung der Funktion der Schaltungsanordnung nach Fig. 3 sei angenommen, daß ein Bewegungsvektor der Größe von beispielsweise sechs Bildelementen vorliegt und daß sich die Helligkeit des betrachteten Bildpunktes von 40 auf 100 % des Maximalwertes ändert. In dem Bildspeicher 3 ist das vorletzte, in dem Bildspeicher 4 das zuletzt empfangene Bild abgelegt. Das erste auf der Bildröhre 18 darzustellende und dementsprechend in den Videospeicher 16 einzuschreibende Bild entspricht dem im Bildspeicher 3 abgelegten Bild. Zur Erzeugung der Adressen zum Einschreiben in den Videospeicher 16 werden daher Adressen benötigt, die den Adressen zum Auslesen aus dem Bildspeicher 3 entsprechen. Dazu wird ein von der Interpolations-Steuerschaltung 28 erzeugter Koeffizient aₖ auf 0 gesetzt, so daß der Bewegungsvektor im Multiplizierer 30 mit 0 multipliziert wird und die Adressen ADR-RD unverändert vom Addierer 31 weitergeleitet werden.

Von der Interpolations-Steuerschaltung 28 werden ferner zwei zueinander komplementäre Koeffizienten bₖ und b_{k-N} gebildet. Dabei ist k die Ordnungszahl eines der von einem empfangenen Bild abzuleitenden darzustellenden Bilder, während N die Anzahl der darzustellenden Bilder pro empfangenen Bild bedeutet. Zum Auslesen des dem empfangenen Bild gleichenden ersten darzustellenden Bildes wird bₖ = 1 gesetzt, während b_{k-N} = 0 ist.

Das somit in den Videospeicher 16 eingeschriebene empfangene Bild wird unverändert aus dem Videospeicher 16 ausgelesen und über den Digital/Analog-Wandler 17 der Bildröhre 18 zugeführt. Mit Hilfe der Addierschaltung 35 wird der vertikalen Komponente der Adressen ADR-RD 2 hinzuaddiert, wodurch das Auslesen aus dem Videospeicher 16 um zwei Zeilen gegenüber dem Einschreiben voreilt. Damit wird vermieden, daß Änderungen des Speicherinhalts stets nach dem Auslesen erfolgen, selbst wenn sie sich infolge der Bewegungsinterpolation unterhalb der durch die Adressen ADR-RD jeweils festgelegten Zeile bemerkbar machen.

Nach dem Einschreiben des empfangenen Bildes in den Videospeicher 16 werden die Daten für ein erstes Zwischenbild ermittelt und in den Videospeicher 16 eingeschrieben. Dieses erfolgt derart, daß von der Interpolations-Steuerschaltung Koeffizienten a₁ = 1/6, b₁ = 5/6 und b_{1-N} = 1/6 den Multiplizierern 30, 32, 33 zugeführt werden. Unter der eingangs erwähnten Annahme, daß MV = 6 ist, wird den Adressen ADR-RD der Wert 1 im Addierer 31 hinzuaddiert. Die aus dem Bildspeicher 3 ausgelesenen Bilddaten werden mit 5/6 und die aus dem Bildspeicher 4 ausgelesenen Bilddaten mit 1/6 multipliziert. Die Ergebnisse der Multiplikation werden im Addierer 34 addiert und dem Dateneingang des Videospeichers 16 zugeführt. Von darzustellendem Bild zu darzustellendem Bild werden aₖ und b_{k-N} jeweils um 1/6 erhöht, während bₖ um 1/6 vermindert wird.

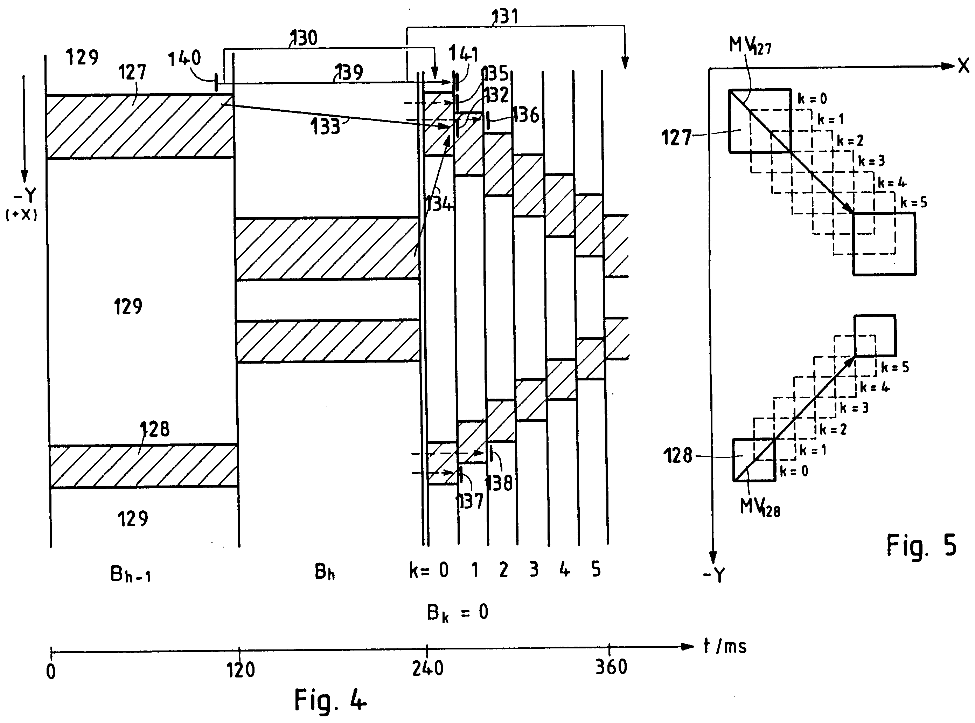

Im folgenden wird die Ableitung der darzustellenden Bilder anhand der Figuren 4 und 5 nochmals erläutert - insbesondere im Hinblick darauf, daß bei der Bewegtbildübertragung meistens bewegte und stehende Bildbestandteile vorhanden sind. Dieses ist beispielsweise der Fall, wenn sich eine im Vordergrund befindliche Person gegenüber dem Hintergrund bewegt.

Die Figuren 4 und 5 zeigen schematisch Teilbereiche von übertragenen und darzustellenden Bildern. In Fig. 4 ist in der Waagerechten die Zeit aufgetragen, während in der Senkrechten die Lage der jeweiligen Bildelemente in horizontaler oder vertikaler Richtung dargestellt ist. Demgegenüber stellt Fig. 5 eine Ansicht des entsprechenden Schirmbildes dar, wobei der zeitliche Ablauf ebenfalls dargestellt ist. In dem ersten in Fig. 4 dargestellten Zeitabschnitt von t = 0 bis t = 120 ms wird ein erstes Bild Bₕ₋₁ empfangen. Es umfaßt in dem dargestellten Teilbereich zwei Objekte 127, 128, die schraffiert vor einem nicht schraffiert dargestellten Hintergrund 129 sichtbar sind. Zusammen mit den Daten des Bildes Bₕ werden Bewegungsvektoren übertragen. Da sich die Objekte 127, 128 im Vordergrund bewegen, sind MV₁₂₇, MV₁₂₈ ungleich 0, während für diejenigen Bildelemente, welche den Hintergrund 129 darstellen, die mit dem Bild Bₕ übertragenen Bewegungsvektoren gleich 0 sind.

Das Bild Bₕ₋₁ wird während des Empfangs in den Bildspeicher 3 eingeschrieben. Bei dem folgenden Bild Bₕ hat sich die Lage der Objekte 127, 128 durch die Bewegung verändert. Dabei hat sich das Objekt 127 um 6 Bildelemente nach rechts und sechs Bildelemente nach unten bewegt, während das Objekt 128 um sechs Bildelemente nach rechts und sechs Bildelemente nach oben verschoben ist. Bei t = 240 ms ist das Bild Bₕ vollständig übertragen und im Bildspeicher 4 (Fig. 1) abgelegt. Danach wird ein weiteres Bild Bₕ₊₁ übertragen, das in Fig. 4 und 5 nicht dargestellt ist, und im Bildspeicher 5 abgelegt.

Während zwischen t = 0 und t = 240 ms empfangene Bilder dargestellt sind, zeigt Fig. 4 zwischen t = 240 ms bis t = 360 ms darzustellende Bilder. Zur Verdeutlichung dessen ist in Fig. 4 bei t = 240 ms eine Doppellinie vorgesehen. Zu diesem Zeitpunkt wird der Bildspeicher 4 vom Schreib- in den Lesebetrieb geschaltet, so daß die Bilder Bₕ₋₁ und Bₕ gleichzeitig zur weiteren Verarbeitung zur Verfügung stehen und aus den Bildspeichern 3 und 4 in der Schaltungsanordnung nach Fig. 3 entsprechend ausgelesen werden können.

Von t = 240 ms bis t = 360 ms werden sechs darzustellende Bilder abgeleitet, in den Videospeicher 16 (Fig. 3) eingeschrieben, wieder ausgelesen und auf der Bildröhre 18 dargestellt. Dabei entspricht das erste darzustellende Bild B₀ dem Bild Bₕ₋₁. Wie bereits im Zusammenhang mit Fig. 3 erwähnt, wird es unverändert bezüglich der Amplitudenwerte und der Lage der Bildelemente vom Bildspeicher 3 ausgelesen und in den Videospeicher 16 eingeschrieben, was in Fig. 4 durch einen Pfeil 130 hervorgehoben ist. Das gleiche erfolgt mit dem Bild Bₕ für ein weiteres Bild B₀ (Pfeil 131).

Das darzustellende Bild B₁ wird durch Interpolation der Amplitudenwerte der jeweiligen Bildpunkte der Bilder Bₕ₋₁ und Bₕ sowie durch eine Verschiebung der jeweiligen Bildelemente gewonnen. Bei den Darstellungen in den Figuren 4 und 5 wird der Einfachheit halber nur die Verschiebung der Bildelemente betrachtet, nicht jedoch deren Amplituden-Interpolation im einzelnen. Letztere ist in Fig. 4 lediglich als Zusammensetzung eines Bildelementes 132 aus Bildelementen der Bilder Bₕ₋₁ und Bₕ durch entsprechende Pfeile 133, 134 angedeutet.

Da zwischen aufeinanderfolgenden empfangenen Bildern eine lineare Bewegung angenommen wird, erfolgt die Verschiebung von darzustellendem Bild zu darzustellendem Bild um jeweils 1/6 des Bewegungsvektors - bei der angenommenen Größe der Bewegungsvektoren, also jeweils um ein Bildelement nach rechts und unten bzw. oben. Dementsprechend ist im Bild Bₖ₌₁ das Objekt 127 um ein Bildelement nach unten und das Objekt 128 um ein Bildelement nach oben gegenüber deren Lage im darzustellenden Bild Bₖ₌₀ verschoben. Da die den Hintergrund 129 betreffenden Bewegungsvektoren gleich 0 sind, erfolgt keine Verschiebung der zugehörigen Bildelemente. Es steht deshalb zunächst auch keine Information für die Bildelemente des Hintergrundes zur Verfügung, welche durch die Bewegung der Objekte frei werden, beispielsweise die Bildelemente 135, 136, 137, 138. Um das Freibleiben des Bildelements 135 zu verdeutlichen, ist mit einem Pfeil 139 in Fig. 4 dargestellt, daß das Bildelement 140 des Hintergrundes lediglich für das entsprechende Bildelement 141 des darzustellenden Bildes Bₖ₌₁ "reicht".

Gemäß einer Weiterbildung der Erfindung ist vorgesehen, die freiwerdenden Bildelemente des Hintergrundes mit Hintergrundinformation des Bildes Bₕ zu beschreiben. Dieses ist in Fig. 4 durch gestrichelte Pfeile dargestellt. Das Einschreiben der Hintergrundinformation in die Speicherzellen des Videospeichers 16, deren Inhalt verschoben ist, geschieht mit einer entsprechenden Auslegung der Interpolations-Steuerschaltung 28 sowie mit Hilfe des Speichers 37 und des Multiplexers 38. Dabei wird Hintergrundinformation aus dem Bild Bₕ nur dann in eine Speicherzelle geschrieben, wenn die Speicherzelle nicht bereits zum Einschreiben eines verschobenen Bildelements adressiert wurde und wenn für das betreffende Bildelement ein Bewegungsvektor vorliegt.

Bei Bewegungen nach oben oder nach links kann dazu derart vorgegangen werden, daß zunächst alle Speicherzellen bei Vorliegen eines Bewegungsvektors beschrieben werden und danach die Hintergrundinformation durch die Bildelemente der nach oben bzw. links bewegten Objekte überschrieben wird. Bei Bewegungen nach unten würden bei diesem Verfahren jedoch Speicherzellen mit durch die Interpolation entstandenen Bildelementen mit Hintergrund überschrieben. Deshalb wird überprüft, ob der Inhalt jeweils einer Speicherzelle dem Einschreiben des jeweils darzustellenden Bildes bereits adressiert war.

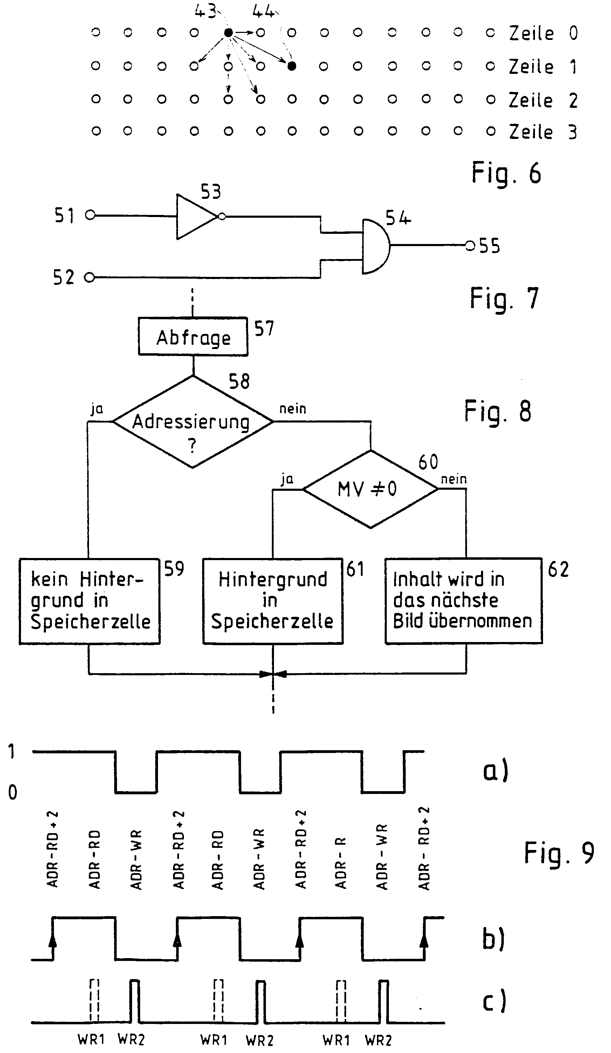

Diese Information ist im Speicher 37 abgelegt. Da bei Schmalband-Bildübertragungssystemen die Größe des Bewegungsvektors begrenzt ist, genügt es, jeweils eine Binärstelle für die Bildelemente einiger Zeilen, beispielsweise 4, zu speichern. Dieses ist in Fig. 6 schematisch dargestellt, wobei die Zahl der Bildelemente pro Zeile der Übersichtlichkeit halber auf 12 begrenzt ist. Wird beispielsweise aufgrund der fortlaufenden Adressierung durch die Bildröhren-Steuerschaltung 20 das Bildelement 143 angesprochen, so wird entsprechend dem Bruchteil des Bewegungsvektors in eine andere Speicherzelle des Speichers 37 eine 1 eingeschrieben. Dieses geschieht nur bei den in Fig. 6 dargestellten Richtungen der Bewegungsvektoren. Bei dem im folgenden betrachteten Beispiel wird in die Speicherzelle 44 eine 1 eingeschrieben. Bei der Bearbeitung der folgenden Zeile wird die Zeile 0 des Speichers 37 nicht mehr benötigt und durch entsprechende Adressierung als vierte Zeile verwendet usw.

Die in Fig. 6 dargestellten, jeweils mit einer Binärstelle pro Bildelement im Speicher 37 gespeicherten Zeilen 1 bis 4 wandern dadurch mit dem Schreibvorgang in den Videospeicher 16 mit. Dabei wird bei jedem Bildelement zunächst geprüft, ob dieses Bildelement bzw. die entsprechende Speicherzelle bereits während der vorangegangenen Zeilen adressiert wurde. Dieses wird an einer 1 in der entsprechenden Speicherzelle des Speichers 37 erkannt, worauf von dem Einschreiben der Hintergrundinformation in die Speicherzelle des Videospeichers 16 abgesehen wird. Unmittelbar danach wird bei Vorhandensein eines Bewegungsvektors die in der entsprechenden Speicherzelle des Bildspeichers 3 vorhandene Information nach Maßgabe der obengenannten Interpolationsregeln in eine andere Speicherzelle eingeschrieben.

Die Auswertung der Information, ob eine Adressierung stattgefunden hat und 0b ein Bewegungsvektor vorliegt, kann mit der in Fig. 7 dargestellten Logikschaltung vorgenommen werden. Dieser wird über einen Eingang 51 die jeweils aus dem Speicher 37 ausgelesene Binärstelle und über einen Eingang 52 das Ausgangssignal des Komparators 29 (Fig. 3) zugeführt, welches besagt, daß ein Bewegungsvektor vorliegt. Die aus dem Speicher 37 ausgelesene Binärstelle wird mit Hilfe eines Invertierers 53 invertiert und gemeinsam mit dem Signal vom Eingang 52 einer Und-Schaltung 54 zugeführt, an dessen Ausgang 55 ein Signal ansteht, welches das Beschreiben der jeweiligen Speicherzelle mit Hintergrundinformation steuert.

Hat also beispielsweise keine Adressierung stattgefunden, weist das Ausgangssignal des Invertierers 53 einen logischen Pegel von 1 auf. Ferner ist der andere Eingang der Und-Schaltung 54 mit dem logischen Pegel 1 beaufschlagt, wenn Bewegung vorliegt. Daraus ergibt sich der logische Pegel 1 am Ausgang 55, was bedeutet, daß die entsprechende Speicherzelle mit der Hintergrundinformation beschrieben wird.

Die Interpolations-Steuerschaltung 28 kann in vorteilhafter Weise durch ein logisches Schaltwerk verwirklicht werden, in welchem unter anderem eine Verknüpfung gemäß Fig. 7 als Tabelle abgelegt ist. Weitere Tabellen enthalten dann die verschiedenen Koeffizienten aₖ, bₖ und b_{k-N} sowie eine Reihe von Steuersignalen, beispielsweise für die Multiplexer.

Die Steuerung zum Beschreiben des Videospeichers 16, insbesondere die Entscheidung, ob in eine Speicherzelle Hintergrundinformation eingeschrieben werden soll, kann bei der Verwendung eines Mikroprozessors in der Interpolations-Steuerschaltung auch mit dem in Fig. 8 dargestellten Programm erfolgen. Nach einer Abfrage 57 der jeweiligen Speicherzelle des Speichers 37 erfolgt eine Verzweigung des Programms bei 58. Hat die Abfrage eine 1 ergeben, bedeutet dieses, daß bereits eine Adressierung stattgefunden hat, so daß das Programm die entsprechende Zelle des Videospeichers 16 unverändert läßt. Der Inhalt der soeben abgefragten Speicherzelle des Speichers 37 wird jedoch gelöscht. Hat die Abfrage jedoch eine 0 ergeben, erfolgt nach der Verzweigung 58 eine weitere Verzweigung 59 in Abhängigkeit vom Vorliegen von Bewegung. Ist der Bewegungsvektor größer als 0, wird in die betreffende Speicherzelle des Videospeichers 16 Hintergrundinformation eingeschrieben. Liegt jedoch keine Bewegung vor, so wird im Programmteil 62 der Speicherzelleninhalt des vorhergehenden Bildes in die Speicherzelle geschrieben. (Es wird nur eine Interpolation der Grauwerte durchgeführt).

Im folgenden wird anhand von Fig. 9 die Steuerung des Videospeichers 16 (Fig. 3) erläutert. Dazu ist in Zeile a der Umschalttakt für den Multiplexer 19 dargestellt, wobei 0 die linke Stellung des Multiplexers 19 bedeutet, in welcher eine Schreibadresse pro Takt vom Addierer 31 zugeführt wird. Während der rechten Stellung des Multiplexers 19, die in Fig. 9 mit dem Pegel 1 gekennzeichnet ist, werden Adressen vom Umschalter 36 zugeführt. Während einer Phase des Umschaltsignals des Multiplexers wird zunächst eine Leseadresse zugeführt, bei welcher die Zeilenkomponente gegenüber der Adresse ADR-RD um 2 erhöht ist. Danach wird bei gleichem Pegel des Multiplexerschaltsignals der Umschalter 36 durch ein entsprechendes Steuersignal von der Interpolations-Steuerschaltung 28 in die linke Stelle bewegt, so daß die unveränderte Adresse ADR-RD dem Adresseneingang des Videospeichers 16 zugeführt wird.

Zeile b der Fig. 9 zeigt ein Taktsignal, mit welchem ein Eingangsregister des Digital/Analog-Wandlers 17 getaktet wird. Zu den mit den Pfeilen hervorgehobenen Flanken des Taktsignals wird der Inhalt der durch die Adresse ADDR-RD + 2 angesprochenen Speicherzelle ausgelesen.

Zeile c der Fig. 9 zeigt ein Schreibsignal WR, das einem entsprechenden Eingang des Videospeichers 16 von der Interpolations-Steuerschaltung 28 zugeführt wird. Das Signal WR besteht aus zwei ineinander verschachtelten Impulsreihen, von denen die Impulse WR1 nur dann dem Videospeicher 16 zugeführt werden, wenn die betreffende Speicherzelle mit Hintergrund beschrieben wird. Zu diesem Zeitpunkt liegt die Adresse ADR-RD an der Speicherzelle und die Multiplizierer 32, 33 werden von der Interpolations-Steuerschaltung 28 derart gesteuert, daß aus dem Bildspeicher 4 die Hintergrundinformation ausgelesen und dem Videospeicher 16 zugeführt wird. Während der regelmäßig auftretenden Impulse WR2 liegt die Adresse ADR-WR am Adresseneingang des Videospeichers 16, so daß entsprechend der zu interpolierenden Bewegung eine andere Speicherzelle beschrieben wird bzw. die gleiche, wenn der Bewegungsvektor gleich 0 ist. Dabei liegt am Dateneingang DI des Videospeichers 16 das Ergebnis an, das mit Hilfe der Multiplizierer 32, 33 und des Addierers 34 gewonnen wird.

Während der danach auftretenden positiven Flanke des in Zeile b dargestellten Auslesesignals liegt am Adresseneingang des Videospeichers 16 die Leseadresse ADDR-RD + 2 an, so daß ein um zwei Zeilen tiefer gelegenes Bildelement ausgelesen wird. Dadurch wird ein ungestörtes Auslesen des zuvor in den Videospeicher 16 eingeschriebenen Bildes möglich, ohne daß es durch Vorgänge beim Einschreiben des neuen Bildes gestört wird.

## Patentansprüche

1. Verfahren zur Wiedergabe von empfangenen Videosignalen, welche Bilder verschiedener Bewegungsphasen von aufgenommenen Objekten darstellen, wobei zusätzlich zu den Videosignalen Bewegungsvektoren empfangen werden und wobei innerhalb einer Bildperiode der empfangenen Videosignale mehrere Bilder dargestellt werden,
- wobei eines der pro empfangenen Bild darzustellenden Bilder einem empfangenen Bild entspricht und
- wobei Signale für weitere darzustellende Bilder (Zwischenbilder) aus den Signalen zweier aufeinanderfolgend empfangener Bilder dadurch gewonnen werden, daß die Bildelemente des einen empfangenen Bildes von Zwischenbild zu Zwischenbild um einen Bruchteil des für das jeweilige Bildelement gültigen Bewegungsvektors des empfangenen Bildes verschoben werden, wobei sich der Bruchteil aus der Zahl der darzustellenden Bilder pro empfangenem Bild ergibt, und
- wobei die Amplituden der Videosignale der Bildelemente des einen empfangenen Bildes und der um den Bewegungsvektor entfernten Bildelemente des folgenden empfangenen Bildes unter Berücksichtigung der Lage des jeweiligen Bildelementes des darzustellenden Bildes zwischen den entsprechenden Bildelementen der empfangenen Bilder gemittelt werden,
dadurch gekennzeichnet, daß diejenigen Bildelemente (135-138) der darzustellenden Bilder (Bₖ), welche nicht durch Verschieben jeweils eines Bildelementes des empfangenen Bildes (Bₙ₋₁) mit Information versehen sind, für die jedoch ein Bewegungsvektor des entsprechenden Bildelements des empfangenen Bildes (Bₙ₋₁) vorliegt, mit Information aus entsprechenden Bildelementen des jeweils folgenden empfangenen Bild (Bₙ) versehen werden, wenn für diese Bildelemente (135-138) nicht schon eine Information vorliegt, daß sie mit verschobenen Bildelementen des folgenden Bildes (Bₙ), für die ein Bewegungsvektor vorliegt, überschrieben werden.

2. Schaltungsanordnung zur Durchführung des Verfahrens nach Anspruch 1, bei der
für mindestens zwei aufeinanderfolgend empfangene Bilder je ein Bildspeicher (3, 4) und mindestens ein Speicher (6) für die Bewegungsvektoren des einen empfangenen Bildes und ein weiterer Speicher (Videospeicher) (16) zur Speicherung jeweils eines darzustellenden Bildes vorgesehen sind, dem Speicher (6) für die Bewegungsvektoren einerseits und den Bildspeichern andererseits jeweils eine Rechenschaltung nachgeschaltet ist,
die dem Speicher (6) für die Bewegungsvektoren nachgeschaltete erste Rechenschaltung (30, 31) so ausgelegt ist, daß sie in Abhängigkeit von dem für das jeweilige Bildelement gültigen Bewegungsvektor die Adresse des Bildelementes von Zwischenbild zu Zwischenbild um einen Bruchteil des Bewegungsvektors verändert,
die den Bildspeichern (3, 4) nachgeordnete zweite Rechenschaltung (32, 33, 34) so ausgelegt ist, daß sie jeweils die Signalwerte, die für ein Bildelement in dem einen Speicher und für ein um den Bewegungsvektor entferntes Bildelement in dem anderen Speicher abgelegt sind, mit einer von Zwischenbild zu Zwischenbild veränderlichen Bewertung mittelt, und bei der
ein Ausgang der ersten Rechenschaltung (30, 31) mit einem Adresseneingang des Videospeichers (16) und ein Ausgang der zweiten Rechenschaltung (32, 33, 34) mit einem Dateneingang des Videospeichers (16) verbunden ist.

3. Schaltungsanordnung nach Anspruch 2, dadurch gekennzeichnet,
daß ein weiterer Bildspeicher (5) für ein weiteres empfangenes Bild und ein weiterer Speicher (7) für Bewegungsvektoren eines weiteren empfangenen Bildes vorgesehen sind,
daß die Bildspeicher (3, 4, 5) und die Speicher (6, 7) für die Bewegungsvektoren bezüglich ihres Schreib- und Lesebetriebs derart umschaltbar sind, daß jeweils ein Bildspeicher mit den jeweils empfangenen Videosignalen und ein Speicher für Bewegungsvektoren mit den jeweils empfangenen Bewegungsvektoren beschrieben wird und
daß aus dem anderen Speicher Bewegungsvektoren und aus den beiden anderen Bildspeichern ausgelesen werden.

4. Schaltungsanordnung nach Anspruch 2, dadurch gekennzeichnet,
daß eine Bildröhren-Steuerschaltung (20) vorgesehen ist, welche synchron zu einem auf einem Bildschirm geschriebenen Bild Adressen für die Bildelemente des Bildes ausgibt,
daß die Adressen Adresseneingängen eines jeweils ersten Bildspeichers (3) und des Speichers (6) für Bewegungsvektoren und nach Addition des jeweiligen Bewegungsvektors Adresseneingängen eines jeweils zweiten Bildspeichers (4) zugeführt werden.

5. Schaltungsanordnung nach Anspruch 4, dadurch gekennzeichnet,
daß die Adressen ferner einem Addierer (31) der ersten Rechenschaltung und über einen Multiplexer (19) Adresseneingängen des Videospeichers (16) zuführbar sind.

6. Schaltungsanordnung nach Anspruch 2, dadurch gekennzeichnet,
daß die erste Rechenschaltung aus einem eingangsseitig mit einem Datenausgang des Speichers (6) verbundenen Multiplizierer (30) und einem nachgeschalteten Addierer (31) besteht, dessen Ausgang den Ausgang der ersten Rechenschaltung bildet,
daß die zweite Rechenschaltung aus zwei Multiplizierern (32, 33), deren Eingänge mit Datenausgängen der Bildspeicher (3, 4) verbunden sind, und einem den Multiplizierern (32, 33) nachgeschalteten Addierer (34) besteht, dessen Ausgang den Ausgang der zweiten Rechenschaltung bildet, und
daß von einer Interpolations-Steuerschaltung (28) den Multiplizierern (30, 32, 33) Koeffizienten zuführbar sind, die von Zwischenbild zu Zwischenbild verändert werden können.

7. Schaltungsanordnung nach Anspruch 2, dadurch gekennzeichnet,
daß eine Logikschaltung (53, 54) vorgesehen ist, welche bewirkt, daß für im Videospeicher (16) abgelegte Bildelemente, die nicht durch Verschiebung eines aus dem ersten Bildspeicher (3) ausgelesenen Bildelements abgeleitet sind und für die ein Bewegungsvektor vorliegt, Information aus dem zweiten Bildspeicher (4) in den Videospeicher (16) eingeschrieben wird.

8. Schaltungsanordnung nach Anspruch 7, dadurch gekennzeichnet,
daß die Adressen und die Ausgangssignale der ersten Recnenschaltung (30, 31) eine Vertikal- und eine Horizontalkomponenete aufweisen und
daß die Horizontalkomponenten und mehrere, vorzugsweise zwei, geringstwertige Binärstellen (LSB) der Vertikalkomponenten der Adressen und der Ausgangssignale der ersten Rechenschaltung (30, 31) zum Lesen und Schreiben einem weiteren Speicher (37) zuführbar sind und
daß in dem weiteren Speicher Informationen abgelegt sind zur Kennzeichnung derjenigen Speicherzellen des Videospeichers (16), welche beim Adressieren des Videospeichers (16) zum Einschreiben der Information aus einem der Bildspeicher (3, 4) bereits bei der Ableitung des gleichen Zwischenbildes mit entsprechend dem Bewegungsvektor abgeleiteter Information beschrieben sind; und
daß beim Vorliegen dieser Information die jeweilige Speicherzelle des Videospeichers (16) nicht mit Information aus dem Bildspeicher (3, 4) beschrieben wird.

9. Schaltungsanordnung nach Anspruch 8, dadurch gekennzeichnet,
daß der weitere Speicher (37) eine Kapazität von jeweils einer Binärstelle für die Bildelemente einiger Zeilen aufweist.

10. Schaltungsanordnung nach Anspruch 2, dadurch gekennzeichnet,
daß die Adressen eine Vertikal- und eine Horizontalkomponente aufweisen und
daß die Vertikalkomponente der Adressen, welche über den Multiplexer (19) den Adresseneingängen des Videospeichers (16) zugeführt werden, um die größtmögliche Vertikalkomponente des Bewegungsvektors geteilt durch die Zahl der darzustellenden Bilder pro empfangenen Bild erhöht wird,
so daß das vom Bewegungsvektor abhängige Einschreiben in den Videospeicher (16) jeweils nur in Speicherstellen erfolgt, die bereits zur Darstellung des Bildes ausgelesen wurden.

11. Verfahren zur Wiedergabe von empfangenen Videosignalen, welche Bilder verschiedener Bewegungsphasen von aufgenommenen Objekten darstellen, wobei zusätzlich zu den Videosignalen Bewegungsvektoren empfangen werden und wobei innerhalb einer Bildperiode der empfangenen Videosignale mehrere Bilder dargestellt werden, wobei eines der pro empfangenem Bild darzustellenden Bilder einem empfangenen Bild entspricht und wobei Signale für weitere darzustellende Bilder (Zwischenbilder) aus den Signalen zweier aufeinanderfolgend empfangener Bilder durch örtliche und amplitudenmäßige Interpolation unter Berücksichtigung der Helligkeitswerte, der Bewegungsvektoren und der Lage von Bildelementen des jeweiligen Zwischenbildes zwischen den durch die Bewegungsvektoren einander zugeordneten Bildelementen eines empfangenen Bildes und eines darauffolgenden empfangenen Bildes abgeleitet werden, dadurch gekennzeichnet, daß diejenigen Bildelemente (135-138) der darzustellenden Bilder (Bₖ), welche nicht durch Verschieben jeweils eines Bildelementes des empfangenen Bildes (Bₙ₋₁) mit Information versehen sind, für die jedoch ein Bewegungsvektor des entsprechenden Bildelements des empfangenen Bildes (Bₙ₋₁) vorliegt, mit Information aus entsprechenden Bildelementen des jeweils folgenden empfangenen Bild (Bₙ) versehen werden, wenn für diese Bildelemente (135-138) nicht schon eine Information vorliegt, daß sie mit verschobenen Bildelementen des folgenden Bildes (Bₙ), für die ein Bewegungsvektor vorliegt, überschrieben werden.

## Claims

1. Method for the reproduction of received video signals which represent frames of different motion phases of recorded objects, motion vectors being received in addition to the video signals and a plurality of frames being displayed within a frame period of the received video signals,
- one of the frames to be displayed per received frame corresponding to a received frame, and
- signals for further frames (intermediate frames) to be displayed being obtained from the signals of two successively received frames in that the pixels of the one received frame are displaced from intermediate frame to intermediate frame by a fraction of that motion vector of the received frame which is applicable to the respective pixel, the fraction being produced from the number of frames to be displayed per received frame, and
- the amplitudes of the video signals of the pixels of the one received frame and of the pixels, removed by the motion vector, of the following received frame being averaged while taking account of the position of the respective pixel of the frame to be displayed between the corresponding pixels of the received frames,
characterized in that those pixels (135-138) of the frames (Bₕ) to be displayed which are not provided with information by displacement of a respective pixel of the received frame (Bₕ₋₁), but for which a motion vector of the corresponding pixel of the received frame (Bₕ₋₁) exists, are provided with information from corresponding pixels of the respectively following received frame (Bₕ) if there does not already exist for these pixels (135-138) an item of information that they are overwritten by displaced pixels of the following frame (Bₕ) for which a motion vector exists.

2. Circuit arrangement for carrying out the method according to Claim 1, in which
in each case one frame store (3, 4) is provided for at least two successively received frames and at least one memory (6) is provided for the motion vectors of the one received frame and a further memory (video memory) (16) for storing a respective frame to be displayed is provided, and a respective computing circuit is connected downstream of the memory (6) for the motion vectors, on the one hand, and of the frame stores, on the other hand, the first computing circuit (30, 31) connected downstream of the memory (6) for the motion vectors is designed in such a way that it changes, as a function of the motion vector which is applicable to the respective pixel, the address of the pixel from intermediate frame to intermediate frame by a fraction of the motion vector,
the second computing circuit (32, 33, 34) arranged downstream of the frame stores (3, 4) is designed in such a way that it in each case averages the signal values which are stored for a pixel in the one store and for a pixel removed by the motion vector in the other store, with weighting which varies from intermediate frame to intermediate frame, and in which
an output of the first computing circuit (30, 31) is connected to an address input of the video memory (16), and an output of the second computing circuit (32, 33, 34) is connected to a data input of the video memory (16).

3. Circuit arrangement according to Claim 2, characterized in that
a further frame store (5) for a further received frame and a further memory (7) for motion vectors of a further received frame are provided,
the frame stores (3, 4, 5) and the memories (6, 7) for the motion vectors can be changed over with respect to their write and read operation in such a way that the respectively received video signals are written to a respective frame store and the respectively received motion vectors are written to a memory for motion vectors, and
motion vectors are read out from the other memory and [lacuna] are read out from the two other frame stores.

4. Circuit arrangement according to Claim 2, characterized in that
a picture tube control circuit (20) is provided which outputs, in synchronism with a frame written on a screen, addresses for the pixels of the frame,
the addresses are fed to address inputs of a respective first frame store (3) and of the memory (6) for motion vectors and, after addition of the respective motion vector, to address inputs of a respective second frame store (4).

5. Circuit arrangement according to Claim 4, characterized in that
the addresses can further be fed to an adder (31) of the first computing circuit and, via a multiplexer (19) to address inputs of the video memory (16).

6. Circuit arrangement according to Claim 2, characterized in that
the first computing circuit comprises a multiplier (30), which is connected on the input side to a data output of the memory (6), and an adder (31) which is connected downstream and the output of which forms the output of the first computing circuit,
the second computing circuit comprises two multipliers (32, 33), the inputs of which are connected to data outputs of the frame stores (3, 4), and an adder (34) which is connected downstream of the multipliers (32, 33) and the output of which forms the output of the second computing circuit, and
coefficients which can be changed from intermediate frame to intermediate frame can be fed to the multipliers (30, 32, 33) by an interpolation control circuit (28).

7. Circuit arrangement according to Claim 2, characterized in that
a logic circuit (53, 54) is provided which ensures that information is written from the second frame store (4) to the video memory (16) for pixels which are stored in the video memory (16), are not derived by displacement of a pixel read out from the first frame store (3) and for which a motion vector exists.

8. Circuit arrangement according to Claim 7, characterized in that
the addresses and the output signals of the first computing circuit (30, 31) have a vertical component and a horizontal component, and
the horizontal components and a plurality of least-significant bits (LSB), preferably two least-significant bits (LSB), of the vertical components of the addresses and of the output signals of the first computing circuit (30, 31) can be fed for reading and writing to a further memory (37), and
information is stored in the further memory for identifying those memory cells of the video memory (16) which, when the video memory (16) is addressed for the purpose of writing information from one of the frame stores (3, 4), have already had information written to them during the derivation of the same intermediate frame, which information is derived in accordance with the motion vector, and
if this information exists, the respective memory cell of the video memory (16) does not have information written to it from the frame store (3, 4).

9. Circuit arrangement according to Claim 8, characterized in that
the further memory (37) has a capacity of in each case one bit for the pixels of several lines.

10. Circuit arrangement according to Claim 2, characterized in that
the addresses have a vertical component and a horizontal component, and
the vertical component of the addresses which are fed via the multiplexer (19) to the address inputs of the video memory (16) is increased by the largest possible vertical component of the motion vector divided by the number of frames to be displayed per received frame, with the result that the writing, as a function of the motion vector, to the video memory (16) in each case takes place only to memory locations which have already been read out for the purpose of displaying the frame.

11. Method for the reproduction of received video signals which represent frames of different motion phases of recorded objects, motion vectors being received in addition to the video signals and a plurality of frames being displayed within a frame period of the received video signals, one of the frames to be displayed per received frame corresponding to a received frame, and signals for further frames (intermediate frames) to be displayed being derived from the signals of two successively received frames by means of local and amplitude interpolation while taking account of the brightness values, the motion vectors and the position of pixels of the respective intermediate frame between the pixels, assigned to one another by the motion vectors, of a received frame and of a following received frame, characterized in that those pixels (135-138) of the frames (Bₕ) to be displayed which are not provided with information by displacement of a respective pixel of the received frame (Bₕ₋₁), but for which a motion vector of the corresponding pixel of the received frame (Bₕ₋₁) exists, are provided with information from corresponding pixels of the respectively following received frame (Bₕ) if there does not already exist for these pixels (135-138) an item of information that they are overwritten by displaced pixels of the following frame (Bₕ) for which a motion vector exists.

## Revendications

1. Procédé de reproduction de signaux vidéo reçus représentant des images à différentes phases de mouvements d'objets enregistrés, et selon lequel en plus des signaux vidéo on reçoit des vecteurs de mouvement et à l'intérieur d'une période d'images on affiche plusieurs images des signaux vidéo reçus,
- l'une des images à représenter à partir de l'image reçue correspondant à cette image reçue et
- les signaux pour d'autres images à représenter (images intermédiaires) sont obtenus à partir des signaux de deux images successivement reçues en décalant les éléments image d'une image reçue, d'une image intermédiaire à une autre, d'une fraction du vecteur de mouvement de l'image reçue, vecteur valable pour l'élément image respectif, cette fraction résultant du nombre d'images à représenter par image reçue, et
- les amplitudes des signaux vidéo des éléments image d'une première image reçue et des éléments image éloignés du vecteur de mouvement par rapport à l'image suivante, reçue, en tenant compte de la position de l'élément image respectif appartenant à l'image à représenter, résultent d'une moyenne faite à partir des éléments image correspondant aux images reçues,
caractérisé en ce que les éléments image respectifs (135-138) des images (Bₖ) représentées, qui ne comportent pas d'informations résultant du décalage chaque fois d'un élément image de l'élément image reçu (Bₕ₋₁), comportent des informations pour lesquelles il y a toutefois un vecteur de mouvement de l'élément image correspondant à l'image reçue (Bₕ₋₁), avec une information de l'élément image correspondant à l'image (Bₙ) reçue à la suite, si pour ces éléments images (135-138) on ne dispose pas déjà d'une information et les éléments image, décalés, de l'image suivante (Bₕ), pour lesquels il y a un vecteur de mouvement, sont enregistrés par-dessus.

2. Circuit pour la mise en oeuvre du procédé selon la revendication 1, caractérisé en ce que pour au moins deux images reçues successivement, il y a chaque fois une mémoire d'image (3, 4) et au moins une mémoire (6) pour les vecteurs de mouvement de l'une des images reçues et d'autres mémoires (mémoires vidéo) (16) pour enregistrer chaque fois une image à représenter, et d'une part la mémoire (6) des vecteurs de mouvement, et d'autre part les mémoires d'images, étant chaque fois suivies d'un circuit de calcul
- le premier circuit de calcul (30, 31) en aval de la mémoire (6) pour les vecteurs de mouvement étant conçu pour qu'en fonction du vecteur de mouvement valable pour l'élément image respectif, les adresses de l'élément image soient modifiées d'une image intermédiaire à l'autre suivant une fraction du vecteur de mouvement,
- le second circuit de calcul (32, 33, 34) en aval des mémoires d'images (3, 4), étant conçu pour que chaque fois les valeurs des signaux d'un élément image soient enregistrées dans une mémoire et pour qu'un élément image éloigné selon le vecteur de mouvement soit enregistré dans une autre mémoire, avec une pondération variable d'une image intermédiaire à l'autre et en ce qu'une sortie du premier circuit de calcul (30, 31) est reliée à une entrée d'adresse de la mémoire vidéo (16) et une sortie du second circuit de calcul (32, 33, 34) est reliée à une entrée de données de la mémoire vidéo (16).

3. Circuit selon la revendication 2, caractérisé par une autre mémoire image (5) pour une autre image reçue et une autre mémoire (7) pour les vecteurs de mouvement d'une autre mémoire reçue, les mémoires image (3, 4, 5) et les mémoires (6, 7) des vecteurs de mouvement sont commutées pour leur mode d'enregistrement et leur mode de lecture chaque fois pour qu'une image de mémoire reçoive les signaux vidéo chaque fois reçus et une mémoire des vecteurs de mouvement enregistre le vecteur de mouvement respectivement reçu et dans l'autre mémoire on lit les vecteurs de mouvement, la lecture concernant également les deux autres mémoires d'images.

4. Circuit selon la revendication 3, caractérisé par un circuit de commande de tube cathodique (20) émettant, en synchronisme avec une image enregistrée sur un écran image, les adresses des éléments image de l'image, les entrées des adresses de chaque fois la première mémoire d'image (3) et la mémoire (6) des vecteurs de mouvement et après addition des entrées d'adresse du vecteur de mouvement respectif on les applique chaque fois à une seconde mémoire d'image (4).

5. Circuit selon la revendication 4, caractérisé en ce que les adresses sont en outre appliquées à un additionneur (31) du premier circuit de calcul et par un multiplexeur (19) aux entrées d'adresse de la mémoire vidéo (16).

6. Circuit selon la revendication 2, caractérisé en ce que le premier circuit de calcul se compose d'un multiplicateur (131) relié en entrée à une sortie de données de la mémoire (6) et suivi d'un additionneur (31) dont la sortie constitue la sortie du premier circuit de calcul, et le second circuit de calcul se compose de deux multiplicateurs (32, 33) dont les entrées sont reliées aux sorties de données de la mémoire image (3, 4) et d'un additionneur (34) en aval des multiplicateurs (32, 33), additionneur dont la sortie forme la sortie du second circuit de calcul, et un circuit de commande d'interpolation (28) fournissant des coefficients aux multiplicateurs (30, 32, 33) qui peuvent varier d'une image intermédiaire à l'autre.

7. Circuit selon la revendication 2, caractérisé par un circuit logique (53, 54) tel que pour des éléments image enregistrés dans la mémoire vidéo (16), et qui ne sont pas déduits par décalage d'un élément image lu dans la première mémoire d'image (3), et pour un vecteur de mouvement, on dispose d'informations de la seconde mémoire d'image (4) enregistrées dans la mémoire vidéo (16).

8. Circuit selon la revendication 7, caractérisé en ce que les adresses et les signaux de sortie du premier circuit de calcul (30, 31) ont une composante verticale et une composante horizontale, les composantes horizontales et plusieurs, de préférence deux positions binaires de faible niveau (LSB) des composantes verticales des adresses et des signaux de sortie du premier circuit de calcul (30, 31) sont appliquées à une autre mémoire (37) pour le mode de lecture et d'enregistrement et dans l'autre mémoire on enregistre des informations pour caractériser les positions respectives de la mémoire vidéo (16) servant à l'adressage de la mémoire vidéo (16) pour l'enregistrement des informations provenant d'une des mémoires vidéo (3, 4) dès la dérivation de la même image intermédiaire avec une information déduite de façon correspondante du vecteur de mouvement et en présence de cette information, la cellule de mémoire respective de la mémoire vidéo (18) n'enregistre pas l'information de la mémoire d'image (3, 4).

9. Circuit selon la revendication 8, caractérisé en ce que d'autres mémoires (37) ont une capacité de chaque fois une position binaire pour les éléments image de quelques lignes.

10. Circuit selon la revendication 2, caractérisé en ce que les adresses ont une composante verticale et une composante horizontale, la composante verticale des adresses appliquées par le multiplexeur (19) aux entrées d'adresse de la mémoire vidéo (16) étant augmentée de la plus grande composante verticale possible du vecteur de mouvement divisée par le nombre d'images à représenter par image reçue, de sorte que l'enregistrement dépendant du vecteur de mouvement dans la mémoire vidéo (16) se fait chaque fois seulement dans les positions de mémoire qui ont déjà été lues pour afficher l'image.

11. Procédé de reproduction de signaux vidéo reçus représentant des images pour différentes phases de mouvements d'objets enregistrés avec des vecteurs de mouvement reçus en plus des signaux vidéo et à l'intérieur d'une période d'image des signaux vidéo reçus on représente plusieurs images, une image à représenter pour chaque image reçue correspondant à une image reçue et les signaux pour les autres images à représenter (images intermédiaires) étant déduits des signaux de deux images successivement reçues par interpolation géométrique et en amplitude en tenant compte des valeurs de luminosité, des vecteurs de mouvement ainsi que de la position des éléments image de chaque image intermédiaire entre les éléments image associés par les vecteurs de mouvement correspondant à une image reçue et à l'image suivante, reçue, caractérisé en ce que les éléments image respectifs (135-138) des images (Bₕ) à représenter, qui ne comportent pas par décalage de chaque fois un élément image de l'image reçue (Bₕ₋₁), une information, mais pour lesquels il y a néanmoins un vecteur de mouvement de l'élément image correspondant de l'image reçue (Bₕ₋₁), sont munis de l'information provenant des éléments image correspondants de chaque image suivante reçue (Bₕ), si pour les éléments image (135-138) il n'y a pas déjà une information pour être enregistrée par les éléments image décalés de l'image suivante (Bₕ) pour lesquels il y a un vecteur de mouvement.
